# EUROPEAN PATENT APPLICATION

(11) **EP 0 936 725 A1**
(43) Date of publication of application: **18.08.1999**
(21) Application number: 99100435.9
(22) Date of filing: 11.01.1999
(51) Int. Cl.: H02M 3/335

(54) **Improvement in a power supply**

(30) Priority: 16.02.1998 IT PN980012
(71) Applicant: ZELTRON S.p.A., I-33030 Campoformido, Udine (IT)
(72) Inventor: Muzzolini, Dario, 33010 Magnano in Riviera (UD) (IT)
(74) Representative: Giugni, Valter

(57) **Abstract**

Switching-type electric power supply fed directly from the power line, adapted to output a stabilized voltage, comprising an input rectifier (10), a transformer (11) and an output rectifier (12). The transformer is controlled by a converter (13) with a feedback regulation circuit comprising a current generator (20) connected to the positive output voltage and driven by an error amplifier (21) connected to the negative output voltage.

This solution enables a more stable output voltage to be obtained for driving power switches, such as Triacs.

## Description

The present invention refers to an improved power supply of the off-line switching type, ie. a switching power supply fed directly off the power line.

Power supplies with a flyback-type topology are known in the art which make use of switches of the TOPSwitch type (a trademark registered by Power Integrations, Inc., Sunnyvale, California, USA). These power supplies are essentially self-biasing, protected converters that are adapted to linearly control their own duty cycle with respect to the input current.

Such power supplies, for a same level of reliability, are less expensive than other solutions making use of discrete MOSFETs or self-oscillating switches. They are used in particular with supply voltages ranging from 110 to 230 V AC and power inputs from 0 to 4 W. Anyway, even power supplies with different characteristics and ratings are available according to the various requirements set by the particular applications. Their high efficiency level is obtained thanks to the utilization of CMOS devices and the integration of as high a number of functions as possibile.

However, they all require a feedback control driven by the input current in order to be able to perform their functions correctly. On the other hand, the related control circuit does not allow for adequately stable and accurate output voltages (for instance the 5-V voltages required to supply digital logic circuits such as microprocessors) to be obtained directly. Therefore, they are not quite so suitable for use in connection with particular applications, such as for instance in the control and regulation circuits of household and similar appliances.

It therefore is a purpose of the present invention to provide an electric switching-type power supply directly fed off the power line, which is actually able to provide an output voltage that is surely and reliably stabilized within the required tolerances. Such a voltage is a negative one and deliberately referred to a phase of the alterating-current power supply line to enable power switches, such as Triacs, to be driven in top-sensitivity quadrants.

The improvement consists in introducing, in the control circuit of the converter, a current generator that is connected to the positive output voltage and is controlled by an error amplifier connected to the negative output voltage of the power supply.

This new solution further makes it possible for a positive, not directly regulated voltage to be available which, when added to the negative one, enables loads to be supplied at a higher, still sufficiently stabilized voltage.

The features and advantages of the present invention will anyway be more readily understood from the description which is given below by way of non-limiting example with reference to the accompanying drawings, in which;
- Figure 1 is a block diagram of a power supply according to the prior art;
- Figure 2 is a block diagram of an off-line switching power supply according to the present invention; and
- Figure 3 is a detailed view of the circuit of the power supply illustrated in Figure 2.

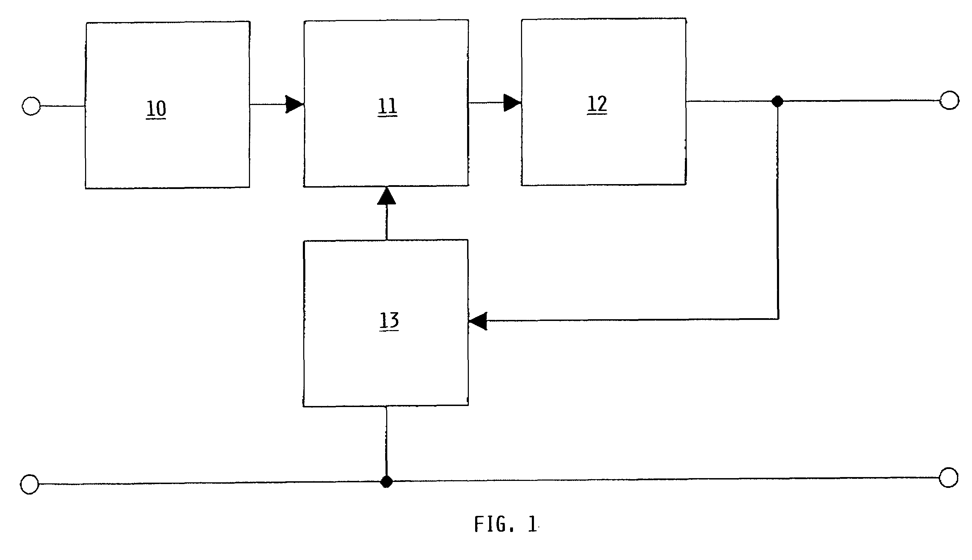

A switching power supply of the off-line type, ie. fed directly from the power line, is essentially constituted (Figure 1) by an input rectifier with filter 10, a transformer 11, an output rectifier with filter 12, and a converter 13. The rectifier 10 receives alternating current from the power line and delivers direct current to the transformer 11, where it is brought to the desired voltage value on the basis of the signal that is delivered to the transformer by the converter 13. The direct current issuing from the transformer 11 is sent to the rectifier 12, which outputs a direct current at a positive output voltage Vout+. The converter 13 is controlled in a feedback mode by the output current Vout+.

Anyway, as already stated above, a power supply of this kind does not allow for sufficiently stable and accurate output voltages to be obtained directly.

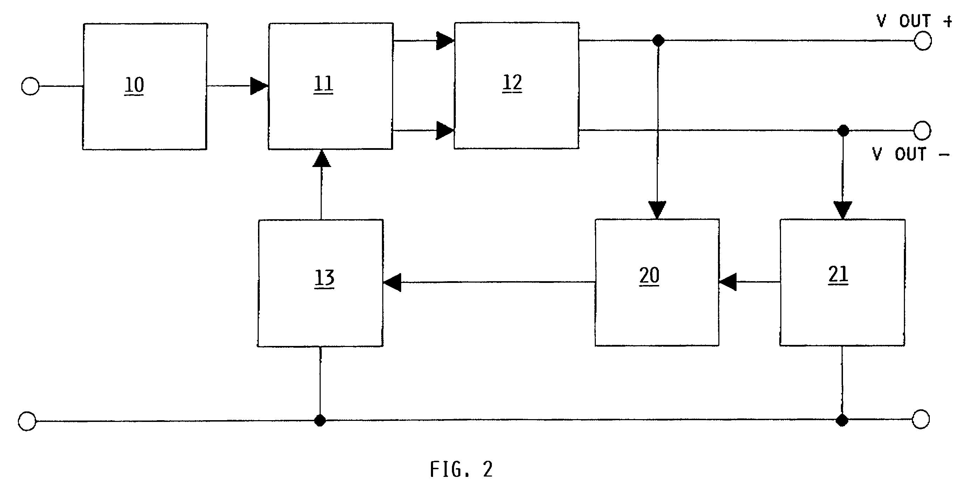

The power supply according to the present invention (Figure 2) comprises again an input rectifier with filter 10, a transformer 11, an output rectifier with filter 12 and a converter 13 connected between the power line and the transformer 11. The improvement, with respect to the above considered prior-art technique, consists in deriving from the output rectifier 12 a positive voltage Vout+ and a negative voltage Vout-, as well as in adding to the regulation circuit a current generator 20 which is connected to the positive output voltage and is driven by an error amplifier 21 that is connected to the negative output voltage.

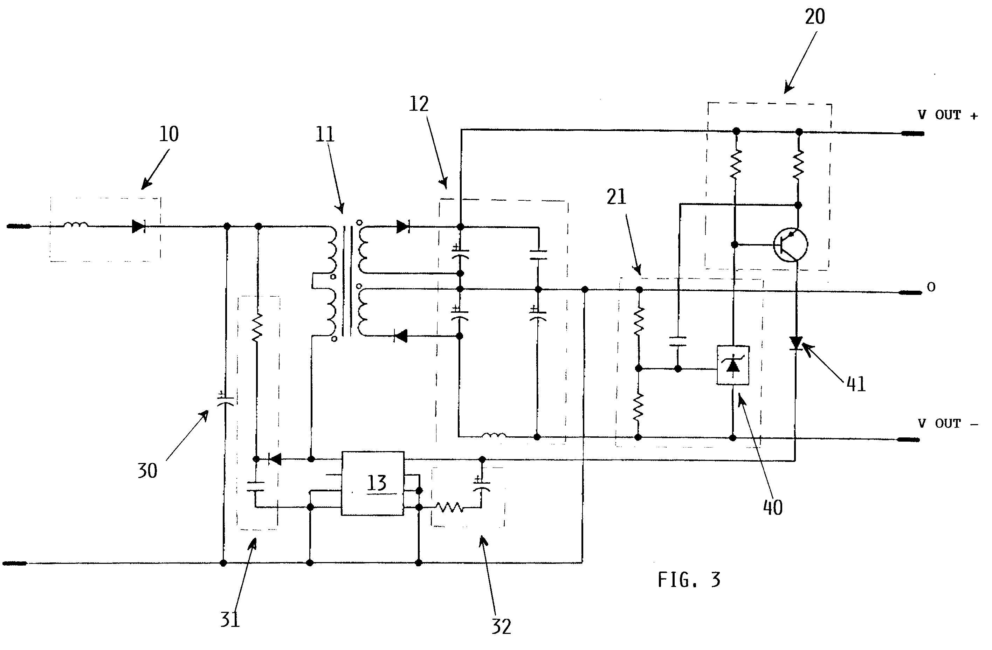

The circuit diagram of the power supply according to the present invention (Figure 3) illustrates in detail the various elements constituting the input current rectifier 10, the voltage transformer 11 and the output current rectifier 12. Furthermore, a number of other elements that are usually present in the circuit of the power supply, such as a power-line filter 30, a voltage limiter 31 and a filter 32 of the regulation circuit, are also shown there.

The current generator 20 and the error amplifier 21 are circuits that, although of a per sè known kind, are used here so as to improve the regulation circuit of the amplifier in view of obtaining from the latter a directly stabilized negative output voltage Vout- and a non-directly stabilized positive output voltage Vout+. In particular, the error amplifier 21 comprises an integrated circuit 40 with a precision programmable Zener diode, from the cathode of which the signal for driving the current generator 20 is derived. Furthermore, the current generator 20 is connected to the control terminal of the converter 13 via a starting diode 41. This diode 41 prevents the current derived from the converter 13 via the transformer 11 from leaking towards the generator 20 upon starting.

The power supply according to the invention, provided with the above described control circuit, makes it possible for a negative output voltage Vout- to be obtained at -5V and duly stabilized within the desired tolerance limits. Such a voltage is a negative one and is intentionally referred to a phase of the alternating-current power-supply line, so as to enable power electronic devices, such as Triacs, to be driven in an optimized manner. Furthermore, the power supply delivers a positive output voltage Vout+ at +8V, which is not regulated directly. Such a positive 8-V output voltage can be added to the negative 5-V output voltage so as to enable loads to be supplied at 13 V. Since the current of the load at 13V flows also in the stabilized 5-V section, the coupling between the two sections of the circuit is made much more effective under a corresponding improvement also in the stabilization effect of the 13-V voltage with respect to variations of the electric load.

## Claims

1. Switching-type electric power supply fed directly from the power line, adapted to output a stabilized voltage for supplying a digital logic circuit, such as a microprocessor for controlling power switches, comprising an input rectifier (10), a transformer (11) and an output rectifier (12), said transformer being controlled by a converter (13) with feedback regulation circuit, said power supply being characterized in that the regulation circuit of said converter (13) comprises a current generator (20) which is connected to the positive output voltage (Vout+) and is driven by an error amplifier (21) connected to the negative output voltage (Vout-).

2. Electric power supply according to claim 1, characterized in that the terminal of the negative output voltage (Vout-) and the terminal of the positive output voltage (Vout+) are adapted to be connected to loads requiring a stabilized voltage that is equal to the sum of said two output voltages.
